# EUROPEAN PATENT APPLICATION

(11) **EP 4 635 838 A1**
(43) Date of publication of application: **22.10.2025**
(21) Application number: 24851974.6
(22) Date of filing: 17.04.2024
(51) Int. Cl.: B62M 3/08

(54) **PEDAL ROTATIONAL FORCE STRENGTHENING DEVICE**

(30) Priority: 10.08.2023 JP 2023138437
(71) Applicant: Geo Sekkei Corporation, Chofu-shi, Tokyo 182-0024 (JP)
(72) Inventor: TSUKUI Takao, Chofu-shi, Tokyo 182-0024 (JP)
(74) Representative: Varbanov, Julian Ivanov
(86) International application number: PCT/JP2024/080054
(87) International publication number: WO 2025/033557

(57) **Abstract**

A pedal rotation force enhancement device for efficiently transmitting leg force is inexpensively provided. A pinion gear is attached to a pedal shaft, a shaft is provided at the front end of the pedal, a movable stepping plate biased so that the rear opens is pivotally attached to the shaft, and a rack gear biased so as to mesh with the pinion gear is suspended from the lower front of the movable stepping plate via the shaft, whereby the opening/closing movement of the movable stepping plate during pedaling creates a ratchet mechanism between the rack gear and the pinion gear, the forward axial rotation of the pedal is locked during meshing, and the force point of the pedal moves from the axial center to the front end, so that the rotational force can be enhanced. When this device is used for a bicycle, a light and powerful ride can be enjoyed simply by replacing the pedals.

## Description

### TECHNICAL FIELD

The present invention relates to a pedal for an object powered by leg force, and in particular to a device for enhancing the rotational force of a pedal in a bicycle.

### Prior Art

Bicycles are a convenient means of transportation that use leg power to pedal and rotate the wheels, and can be considered the most environmentally friendly mode of transportation in every respect. However, since they require physical strength, they are susceptible to factors such as uphill slopes and headwinds during running operation, and there is a demand for technology that enables more efficient running operation.

### SUMMARY OF THE INVENTION

### Problems to be Solved by the Invention

Previously, bicycles have been equipped with internal or external gears to adjust the gear ratio according to muscle strength for comfortable riding. However, while reducing the gear ratio can alleviate the burden on the legs during uphill climbs or headwinds, maintaining speed requires increasing pedal rotation speed, ultimately necessitating a significant sacrifice in speed to maintain a constant level of effort.

Additionally, there are methods that use oval-shaped chainrings to efficiently transmit the force applied to the pedals to the chain. However, these methods have drawbacks such as discomfort caused by changes in angular velocity depending on the pedal position during constant-speed riding, and difficulty in shifting gears on the crank side.

The present invention addresses these issues by shifting the focus to the pedal, which initially transmits leg force, and enables enhanced rotational force simply by replacing the pedal. The objective is to provide an efficient and durable pedal rotational force enhancement device with a simple mechanism at an affordable cost.

### Means for Solving the Problem

To achieve the above objectives, Claim 1 of the present invention relates to a pedal that uses leg force as a driving force, wherein a pinion gear is mounted on the pedal shaft, a movable pedal plate is mounted on the pedal shaft with an axis such that the rear side is open, a rack gear is suspended so that it meshes with the pinion gear via an axle at the lower front portion. During pedaling, the opening and closing motion of the movable pedal creates a ratchet mechanism between the rack gear and the pinion gear. When meshed, the rotation of the pedal axle in the forward direction is locked, causing the force point of the pedal to shift from the axle center to the front end, thereby enhancing rotational force.

This combines a ratchet mechanism with a rotational tracking function. In a conventional ratchet mechanism alone, as the crank rotates, the pedal shaft also rotates while shifting position, so that unless the ankle is forced to track the rotation, the teeth disengage instantly, causing the mechanism to lose function. On the other hand, in the present invention, during the period from when the movable pedal plate opens to when it fully closes during pedaling, the rack gear, which is linked to the pedal, maintains engagement with the pinion gear by rotating in a manner that follows and pushes the pinion gear. This allows the ratchet mechanism to follow and function within approximately half a crankshaft rotation during which pedal force is applied.

Claim 2 describes a structure where a pinion gear is mounted on the pedal shaft, a movable pedal plate is mounted on the rear end of the pedal with an axis set to open forward, and a rack gear is suspended so that it meshes with the pinion gear via an axis at the lower front portion, thus enhancing rotational force.

This results in pedal operation in the opposite direction to the aforementioned pedal, but the ratchet mechanism functions similarly, achieving nearly the same effect. Additionally, since the front end of the movable pedal plate is unrestrained in this case, extending this portion allows for easy enhancement of rotational force.

### EFFECTS OF THE INVENTION

The present invention focuses on the axial force of the crank, torque = pedal force × crank length, to pursue efficient pedaling. Assuming a pedal force of 200 N, a crank length of 0.17 m, the distance between the pedal axis and the movable pedal plate axis is 0.04 m, the torque in the conventional system is 200 N × 0.17 m = 34 N·m. On the other hand, the torque in the present invention is 200 N × (0.17 m + 0.04 m) = 42 N·m, corresponding to approximately a 24% increase in torque in theory.

This calculation is based on the position where the most force can be transmitted when the pedal is pushed forward 90 degrees from the top dead center. However, this alone is insufficient to determine the extent of the effect. By synchronizing the ratchet mechanism with the rotation of the pedal shaft, this effect continues for approximately half a rotation, and it is this sustained torque enhancement that serves as the source of the pedal rotation reduction effect. As a result, while the distance traveled per crank rotation is shorter than in conventional low-speed gears during normal riding, this device achieves the same reduction effect without changing the distance traveled per crank rotation. This allows for riding with reduced physical fatigue while maintaining a constant cadence.

Another advantage and purpose of this device is that its effects can be easily achieved by simply replacing the pedals for any applications requiring leg strength. When used on a bicycle, it enables a light and powerful ride, while on a geared bicycle, it reduces the frequency of gear changes. When used on an electric bicycle, it can extend the range per charge depending on the assist ratio, and when used on a human-powered aircraft, it may even extend the flight range.

### BRIEF DESCRIPTION OF THE DRAWINGS

FIG. 1 is a perspective view showing the first embodiment of the present invention.
FIG. 2 is a disassembled perspective view showing the pedal shaft portion of the first embodiment of the present invention.
FIG. 3 is a disassembled perspective view showing the movable pedal plate portion of the first embodiment of the present invention.
FIG. 4 is a disassembled perspective view showing the pedal body portion of the first embodiment of the present invention.
FIG. 5 is a front view showing the first embodiment of the present invention.
FIG. 6 is a left side view showing the first embodiment of the present invention.
FIG. 7 is a bottom view showing the first embodiment of the present invention.
FIG. 8 is an A-A sectional view showing the first embodiment of the present invention.
FIG. 9 is a left side view showing the pedal trajectory in the first embodiment of the present invention.
Fig. 10 is a left side view showing the second embodiment of the present invention.

### EMBODIMENTS FOR CARRYING OUT THE INVENTION

The present invention is a pedal that is symmetrical left and right and forms a pair, so that the following description will explain the embodiment for the right pedal based on the drawings.

### Example 1

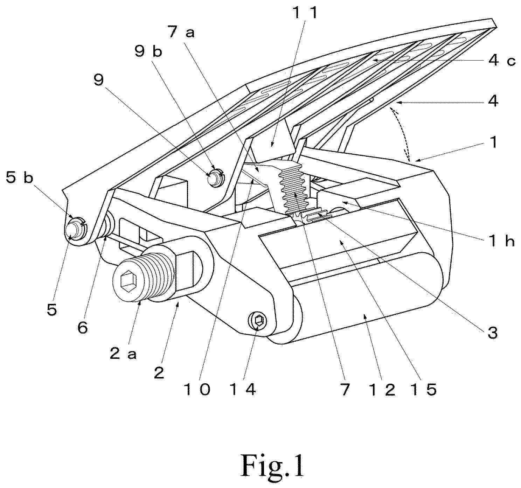

FIG. 1 is a perspective view showing the first embodiment of the present invention, and the device is generally composed of a pedal body 1 and a step-shaped movable footplate 4. The pedal body 1 has a pinion gear 3 mounted at the center of the pedal shaft 2, and a weight 12 is mounted behind it. On the other hand, the movable footplate 4 has a rack gear 7 suspended via a rack spring 10, which is biased rearwardly through a rack shaft 9 at its lower front portion. The front ends of these are axially fixed to the open side by a footplate shaft 5 and a footplate spring 6, allowing the gears to mesh while enabling the movable footplate 4 to open and close in the direction of the dashed arrow.

Note that this biasing means is for resetting the gears when the pedal force is released. Alternatively, an elastic material such as rubber or a plate spring may be interposed in the narrow space where the movable pedal plate 4 and the pedal body 1 intersect. Furthermore, the movable pedal plate 4 may be designed to be detachable from the sole of the shoe, similar to a binding pedal, or the movable pedal plate 4 may be equipped with magnets to attract iron plates attached to the sole of the shoe via magnetic force, thereby enabling the gears to be reset by pulling the foot.

The key feature of this device is that the ratchet mechanism follows the rotation of the pedal shaft. When the crank 16 rotates in response to pedal force, the opening and closing of the movable pedal plate 4 are synchronized with the rotation of the crank 16. During the period when the pedal moves from the upper dead center to the lower dead center, the rack gear 7 is pushed down, and the rack gear 7 is pushed backward by the rotation of the pinion gear 3, locking the pedal shaft rotation in the forward direction while maintaining the ankle angle of the foot during normal pedaling. During the subsequent movement from the lower dead center to the upper dead center, the rack gear 7, which has lost its foot force, is pushed back by the rotation of the pinion gear 3 and rotates freely while being pulled upward, returning to its original state. This series of actions is repeated, continuously providing the load-reducing effect.

To maintain this effect, the range where pedal force is effectively applied should be aligned with the period from the reset state until the movable pedal plate 4 closes completely. Since this range can be set to approximately half a rotation of the crank 16 at most, the number of teeth on rack gear 7 can be arbitrarily set to half or fewer than the number of teeth on pinion gear 3.

Furthermore, rack gear 7 has a mechanism where it engages with pinion gear 3 when it receives pedal force and disengages instantly when pedal force is lost. This mechanism is achieved by offsetting the support point of rack gear 7, which is suspended from movable pedal plate 4, from the tooth side. Therefore, rack gear 7 is shaped like an L with an arm portion 7a. If the pivot point is not offset and the rack gear 7 is kept in a straight line, the rack spring 10 must be reinforced to prevent the meshing parts from disengaging. However, this has the drawback of making disengagement difficult during reset. Note that the tooth profile of the rack gear 7 may be straight or have a gentle curved arc shape.

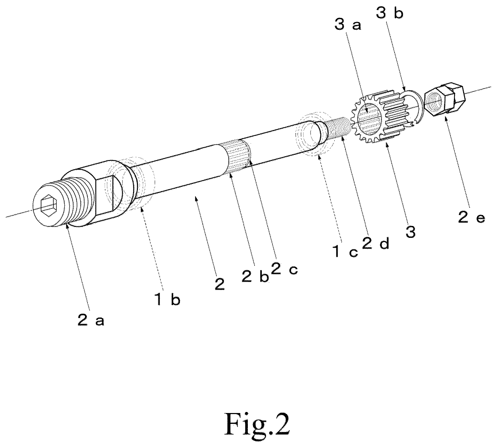

FIG. 2 is an exploded perspective view showing the pedal shaft portion in the first embodiment of the present invention, where the pedal shaft 2 is gradually tapered from the pedal mounting screw portion 2a toward the end for strength and assembly purposes. The assembly procedure involves inserting the pedal shaft 2 between the large bearing 1b and small bearing 1c, which are disposed on the pedal body 1 side and indicated by dashed lines. The spline concave portion 3a of the pinion gear 3 is first inserted into the spline convex portion 2b at the center of the shaft at the meshing opening 1h, the stop ring 3b is inserted into the stop ring groove 2c and fixed, and then the shaft fixing screw portion 2d is passed through the bearing small 1c, followed by securing the shaft with two shaft fixing nuts 2e.

Note that the materials for the pedal shaft 2 and pinion gear 3 are alloy steels such as chromium-molybdenum steel or stainless steel, which possess both strength and corrosion resistance. Additionally, if the outer diameter of pinion gear 3 is made smaller than the inner diameter of bearing large 1b, and pinion gear 3 is integrally formed on pedal shaft 2 itself through a one-piece machining process, the shaft can be easily mounted from one side, the meshing opening 1h becomes smaller, the main body strength increases, rack gear 7 becomes smaller, and the opening angle of movable pedal plate 4 decreases, improving the balance of these components and enabling a lightweight and compact design including weight 12.

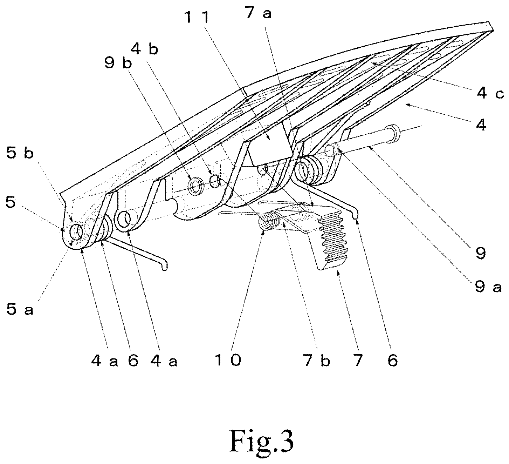

FIG. 3 is an exploded perspective view showing the movable pedal portion in the first embodiment of the present invention. At the lower front portion of the movable pedal 4, a pair of pedal springs 6 are arranged alongside a row of reinforcement plate shaft holes 4a and reinforcement plate rack shaft holes 4b. These are fitted into a row of pedal sliding grooves 1g provided at the front of the pedal body 1, and is passed through the pedal shaft 5 shown by the dashed line, and secured in the retaining groove 5a with a retaining ring 5b, thereby allowing the assembly to open and close. Additionally, the rack gear 7 is inclined at its tip to allow free rotation during pedal reverse rotation, while assembly involves passing the rack shaft 9 through the arm shaft hole section 7b, which has the rack spring 10 set between the pair of reinforcement plate rack shaft hole sections 4b, and securing the stop wheel 9b in the stop wheel groove 9a to fix the shaft, thereby suspending it in a rearwardly biased state. Furthermore, although the bearings for each small-diameter shaft hole are omitted in the figures, sliding bearings or the like may be installed as needed.

Note that the material for the movable pedal 4 is preferably a lightweight, high-strength material such as aluminum alloy or fiber-reinforced resin, depending on the degree of slimming of the shape, and it may also be made of iron or stainless steel. Furthermore, rack gear 7, rack shaft 9, and pedal shaft 5 are suitable for alloy steel materials with strength and corrosion resistance, such as chromium-molybdenum steel or stainless steel. The torsion coil springs of pedal spring 6 and rack spring 10 are suitable for stainless steel springs or spring materials with anti-corrosion treatment. Furthermore, the stopper 11 is a rack stopper and damper fixed above the rack gear 7, and elastic materials such as hard rubber or metal with rubber sandwiched between them are suitable, but springs or resin may also be used.

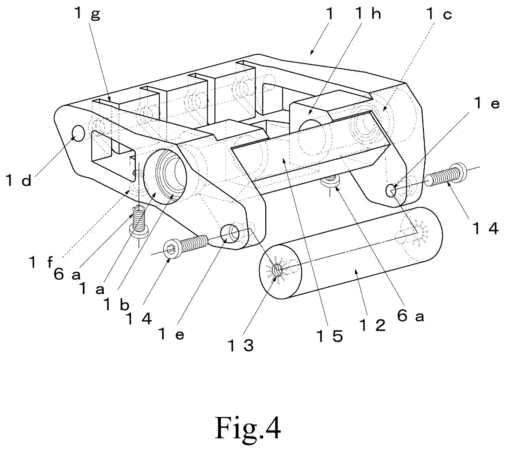

FIG. 4 is an exploded perspective view showing the pedal body portion in the first embodiment of the present invention. At the front end of the pedal body 1, a pedal sliding groove 1g is formed in alignment with a row of reinforcement plate shaft holes 4a and the like, which are engaged with the pedal shaft hole 1d, to counteract lateral torsional buckling of the movable pedal 4. Additionally, bearing large 1b and bearing small 1c, which are bearings or sliding bearings, are arranged at both ends of pedal shaft insertion hole 1a. Adjustment screw holes 1f are provided in front of these, and adjustment screws 6a are mounted in them. The screws are secured by engaging the holes and recesses at their tips with pedal springs 6, preventing them from loosening. Furthermore, behind the central engagement opening 1h is a reflector position 15, with a weight 12 attached to its end. Note that the material for the pedal body 1 is preferably a lightweight, high-strength material such as aluminum alloy or fiber-reinforced resin.

The weight 12 is an accessory designed to make it easier to place the foot on the pedal at the start of pedaling and to ensure safe foot placement, and it functions as a balancer to maintain the horizontal position of the movable pedal plate 4. Furthermore, the weight 12 has fixed screw holes 13 with radial protrusions arranged eccentrically around it. When attaching the weight using fixed screws 14 through the weight fixing holes 1e, the weight can be rotated slightly to adjust the balance by changing the center of gravity position.

In the figure, the weights are shown as independent cylindrical shapes, but any shape is acceptable as long as the weight balance is maintained. The material can be any common metal such as stainless steel, iron, or copper. However, if using a heavy and soft metal like lead, protection with a cylindrical cover is necessary. Note that this equipment is only necessary when starting to ride and is not required during pedaling, as it does not affect the load-reducing effect. Once accustomed to the system, it may become unnecessary.

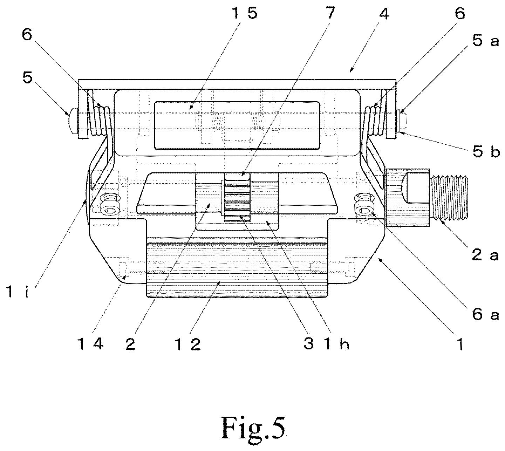

FIG. 5 is a front view showing the first embodiment of the present invention, with the reset being complete, the movable pedal plate 4 being fully open, and the horizontal balance being maintained in the free state. The mounting portion of the rear-most weight 12 is tapered diagonally as a safety measure to prevent the pedal from touching the ground when the bicycle is tilted.

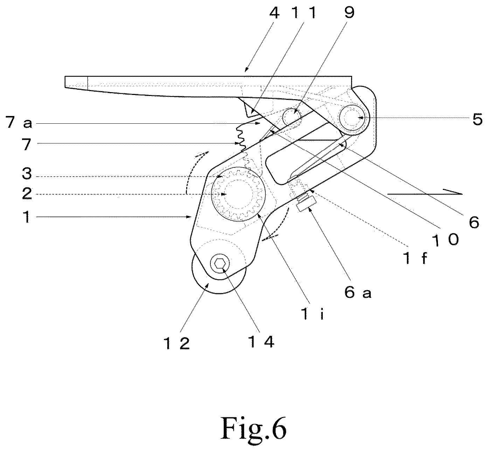

FIG. 6 is a left side view of the first embodiment of the present invention, showing the free state after reset completion, being similar to FIG. 5. When a force is applied to the pedals from this state, the bicycle moves in the direction of the arrow, and the rack gear 7 moves downward in conjunction with the movement of the movable pedal plate 4, pushing the pinion gear 3 in the direction of the dotted arrow, thereby activating the ratchet mechanism. Until the movable pedal plate 4 closes completely, the load on the ankle is reduced, and a natural movement makes it possible to continuously obtain an effect of load reducing by enhancing pedal rotational force.

Normally, this device is designed so that the movable pedal plate 4 is always biased toward the open side by the spring force of the pedal spring 6, enabling riding with enhanced pedal rotational force at all times. On the other hand, by adjusting the spring force of the pedal spring 6 or the adjustment screw 6a, the weight of one leg when seated on the saddle can be balanced with the spring force, allowing the movable pedal plate 4 to close in the conventional pedal state during normal riding where the pedal is closed by the weight of the legs. This function can be activated as needed only when climbing hills or facing headwinds where additional load is applied.

This is because when load is felt on the foot during pedaling, the pulling foot reflexively rises. During this reflexive movement, the load on the movable pedal 4 is eliminated as it returns from the bottom dead center to the top dead center, allowing the spring's rebound force to prevail and reset, enabling enhanced rotational power when needed. This can be compared to a car. Namely, if a gear-equipped bicycle is like a manual transmission vehicle, then a bicycle equipped with this device is like an automatic transmission vehicle, enabling smooth and powerful riding without gear shifting.

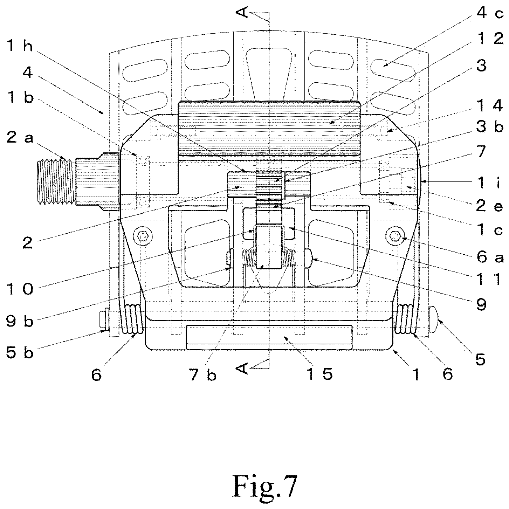

FIG. 7 is a bottom view showing the first embodiment of the present invention, illustrating a condition when the movable pedal 4 is fully depressed. The top surface of the movable pedal 4 has anti-slip holes 4c to account for friction with the sole of the shoe and for weight reduction, but other anti-slip measures or the application of friction sheets may also be employed.

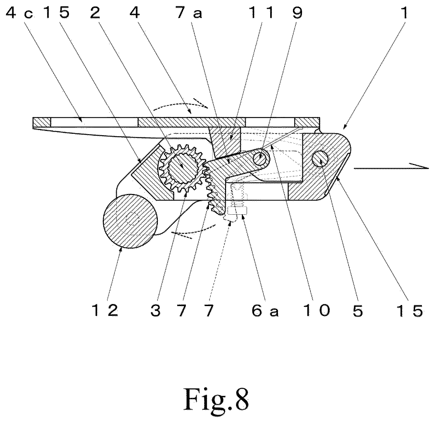

FIG. 8 is a cross-sectional view along A-A line of the first embodiment of the present invention, showing a condition near the bottom dead center when the movable pedal 4 is fully depressed, serving as condition similar to FIG. 7. At this time, the stopper 11 forces the arm portion 7a of the L-shaped rack gear 7 to move downwardly, causing the rack gear 7 to fully engage its teeth and move to a position where it is easy to disengage from the pinion gear 3.

As a result, even if the tooth engagement deteriorates slightly due to aging, the range in which the ratchet mechanism can follow and function can be maximized, thereby continuing to achieve the reduction effect. On the other hand, although the rack gear 7 in the figure shows a condition just before reset, in the next instant it is pushed back to the position indicated by the dashed line, by virtue of pinion gear 3 rotating in the direction of the dashed arrow, and the reset is completed by the next upper dead center.

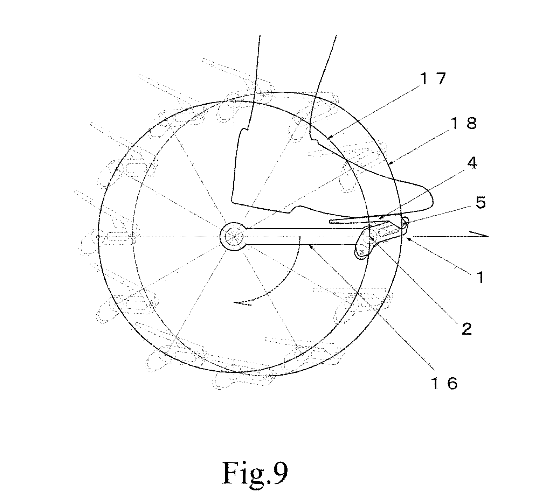

FIG. 9 is a left side view showing the pedal trajectory in the first embodiment of the present invention, illustrating the state of the device at each rotation angle of the crank 16 during pedaling in the direction of the arrow. The pedal axis trajectory 17 corresponds to the force point trajectory of a conventional pedal, with the length of the crank 16 serving as the radius. However, the force point trajectory 18 of this pedal indicates the points through which the pedal plate axis 5 passes within the range where the ratchet mechanism acts, and corresponds to the trajectory resulting from the extension of the crank from the top dead center to the bottom dead center. Incidentally, in conventional pedals, if the crank is lengthened to achieve a similar effect, the rotational range becomes too large, causing strain on leg strength, and issues arise such as pedal contact with the ground when the bicycle is tilted.

### Example 2

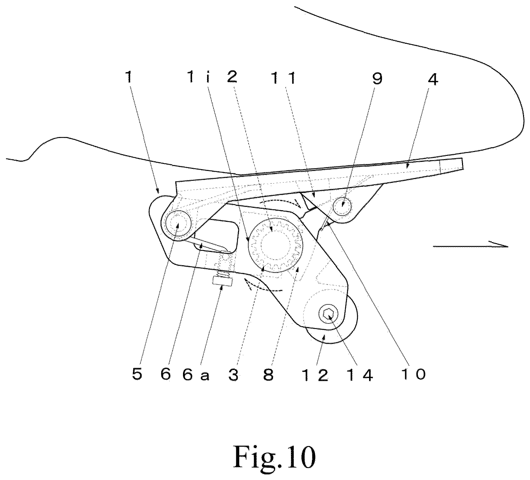

FIG. 10 is a left side view illustrating the second embodiment of the present invention, showing the position where the pedal is pressed forward approximately 90 degrees from the top dead center during pedaling in the direction of the arrow. This is an inverted type of Example 1, where a pinion gear 3 is mounted on the pedal shaft 2 of the pedal body 1, and a movable pedal plate 4 is mounted on the rear end of the pinion gear 3, biased forward by a pedal spring 6. An arc-shaped rack gear 8 is suspended below the pedal plate 4 via a rack shaft 9, biased to mesh with the pinion gear 3 by a rack spring 10. The ratchet mechanism operates in accordance with the rotation of the pedal shaft 2, achieving effects similar to those of Example 1.

### Explanations of Reference Numerals

- 1: pedal body
- 1a: pedal shaft insertion hole
- 1b: large bearing
- 1c: small bearing
- 1d: pedal shaft hole
- 1e: weight fixing hole
- 1f: adjustment screw hole
- 1g: pedal sliding groove
- 1h: engagement opening
- 1i: shaft cap
- 2: pedal shaft
- 2a: pedal mounting screw portion
- 2b: spline protrusion
- 2c: stop ring groove
- 2d: shaft fixing screw portion
- 2e: shaft fixing nut
- 3: pinion gear
- 3a: spline recess
- 3b: stop ring
- 4: movable pedal
- 4a: reinforcement plate shaft hole section
- 4b: reinforcement plate rack shaft hole section
- 4c: slip-proof hole
- 5: pedal shaft
- 5a: stop ring groove
- 5b: stop ring
- 6: pedal spring
- 6a: adjustment screw
- 7: rack gear
- 7a: arm section
- 7b: arm shaft hole section
- 8: arc-shaped rack gear
- 9: rack shaft
- 9a: stop ring groove
- 9b: stop ring
- 10: rack spring
- 11: stopper
- 12: weight
- 13: fixed screw hole
- 14: fixed screw
- 15: reflector position
- 16: crank
- 17: pedal shaft trajectory
- 18: force point trajectory of the main pedal

## Claims

1. A pedal rotational force enhancement device, wherein:
in a pedal that uses leg power as a power source, a pinion gear is attached to a pedal shaft, a shaft is provided at the pedal's front end, a movable stepping plate biased so as to open at the rear is pivoted thereon, a rack gear biased so as to mesh with a pinion gear is suspended from the lower front portion via a shaft, so that the opening and closing movement of a movable stepping plate during pedaling creates a rachet mechanism between a rack gear and a pinion gear, and while meshing, the axial rotation of a pedal in the forward direction is locked and the force point of a pedal moves from the axial center to the front end, thereby enhancing the rotational force.

2. The pedal rotational force enhancement device according to Claim 1, wherein:
the pinion gear is attached to the pedal shaft, the shaft is provided at the rear end of the pedal, a movable stepping plate biased so as to open forward is pivoted thereon, and a rack gear biased so as to mesh with a pinion gear is suspended from a lower front portion via a shaft, thereby enhancing the rotational force.
